# EUROPEAN PATENT APPLICATION

(11) **EP 2 178 294 A1**
(43) Date of publication of application: **21.04.2010**
(21) Application number: 09163138.2
(22) Date of filing: 18.06.2009
(51) Int. Cl.: H04N 5/44, G04G 7/02

(54) **Image processing apparatus and method of controlling the same**

(30) Priority: 20.10.2008 KR 20080102717
(71) Applicant: Samsung Electronics Co., Ltd., Suwon-si, Gyeonggi-do 442-742 (KR)
(72) Inventor: Lee, Young-jin, Gyeonggi-do (KR); Jeong, Ju-sun, Gyeonggi-do (KR)
(74) Representative: Clark, David James

(57) **Abstract**

An image processing apparatus includes: a storing unit which stores information on a standard time zone; a receiving unit which receives a broadcasting signal containing base station information; and a controller which detects the base station information from the broadcasting signal and sets the standard time zone corresponding to the base station information by referring to the storing unit. With the above configuration, it is possible to automatically set various basic items at an initial setting of the image processing apparatus.

## Description

### BACKGROUND OF INVENTION

### Field of Invention

Methods and apparatus consistent with the present invention relate to an image processing and controlling the same, and more particularly, to an image processing apparatus and a method of controlling the same, which allow a user to set various items more conveniently and easily when he/she uses an image processing apparatus for the first time.

### Description of the Related Art

A user who purchased an image processing apparatus may set basic items. In addition, if a use region of the image processing apparatus is changed or the user wishes to change a set basic item, the user initializes the image processing apparatus and resets the set basic item. To this end, the user inputs information on the basic item(s) manually in first booting or plug & play for the image processing apparatus. For example, the user directly inputs information on his/her nationality or language or information on standard time zone of a corresponding region.

In this manner, the user had to directly input the basic item(s) at an initial setting stage of the image processing apparatus in the past.

### SUMMARY OF THE INVENTION

Accordingly, it is an aspect of the present invention to provide an image processing apparatus and a method of controlling the same, which allow various basic items to be automatically set using information contained in a digital broadcasting signal without separate setting by a user.

Additional aspects of the present invention will be set forth in part in the description which follows and, in part, will be obvious from the description, or may be learned by practice of the present invention.

The foregoing and/or other aspects of the present invention can be achieved by providing an image processing apparatus including: a storing unit which stores information on a standard time zone; a receiving unit which receives a broadcasting signal containing base station information; and a controller which detects the base station information from the broadcasting signal and sets the standard time zone corresponding to the base station information by referring to the storing unit.

According to an aspect of the invention, the controller may set the standard time zone corresponding to the base station information most frequently detected. According to an aspect of the invention, the base station information may be a Cell ID. According to an aspect of the invention, the controller may detect the Cell ID from transport stream (TPS) information contained in the broadcasting signal. According to an aspect of the invention, the controller may set the standard time zone at an initial booting or initialization of the image processing apparatus. According to an aspect of the invention, the storing unit may store information on the standard time zone corresponding to each base station information. According to an aspect of the invention, the image processing apparatus may further include an output unit which outputs a user menu to allow a user to set the standard time zone. According to an aspect of the invention, the controller may set at least one of country information and language information corresponding to the base station information. According to an aspect of the invention, the controller may provide at least one of weather information and news information corresponding to the detected base station information. According to an aspect of the invention, the controller may set the standard time zone based on information input from a user.

The foregoing and/or other aspects of the present invention can be achieved by providing a control method of an image processing apparatus, including: storing information on a standard time zone; receiving a broadcasting signal containing base station information; and detecting the base station information from the broadcasting signal and setting the standard time zone corresponding to the base station information by referring to the storing unit.

According to an aspect of the invention, the setting the standard time zone may include setting the standard time zone corresponding to the base station information most frequently detected. According to an aspect of the invention, the base station information may be a Cell ID. According to an aspect of the invention, the detecting the base station information may include detecting the Cell ID from transport stream (TPS) information contained in the broadcasting signal. According to an aspect of the invention, the setting the standard time zone may include setting the standard time zone at an initial booting or initialization of the image processing apparatus. According to an aspect of the invention, the storing information may include storing information on the standard time zone corresponding to each base station information. According to an aspect of the invention, the control method may further include outputting a user menu to allow a user to set the standard time zone. According to an aspect of the invention, the setting the standard time zone may include setting at least one of country information and language information corresponding to the base station information. According to an aspect of the invention, the setting the standard time zone may include providing at least one of weather information and news information corresponding to the detected base station information. According to an aspect of the invention, the setting the standard time zone may include setting the standard time zone based on information input from a user.

As described above, according to the exemplary embodiments present invention, various basic items can be automatically set at an initial setting of the image processing apparatus using information contained in a digital broadcasting signal, thereby providing convenience for a user.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:

FIG. 1 is a view showing a configuration of an image processing apparatus according to an exemplary embodiment of the present invention.

FIG. 2 is a view showing Cell IDs for respective regions of New Zealand.

FIG. 3 is a view showing a control process of an image processing apparatus according to a first embodiment of the invention.

FIG. 4 is a view showing a control process of an image processing apparatus according to a second embodiment of the invention.

FIG. 5 is a view showing a control process of an image processing apparatus according to a third embodiment of the invention.

### DETAILED DESCRIPTION OF EXEMPLARY EMBODIMENTS OF THE INVENTION

Reference will now be made in detail to the embodiments of the present invention, examples of which are illustrated in the accompanying drawings, so that those in the art can easily practice the present invention. The present invention is not limited to exemplary embodiment disclosed herein but may be implemented in different forms. In the following embodiments, for the purpose of clarity, the same components are denoted by the same reference numerals throughout the drawings, and explanation thereof will be representatively given in a first embodiment but will be omitted in other embodiments.

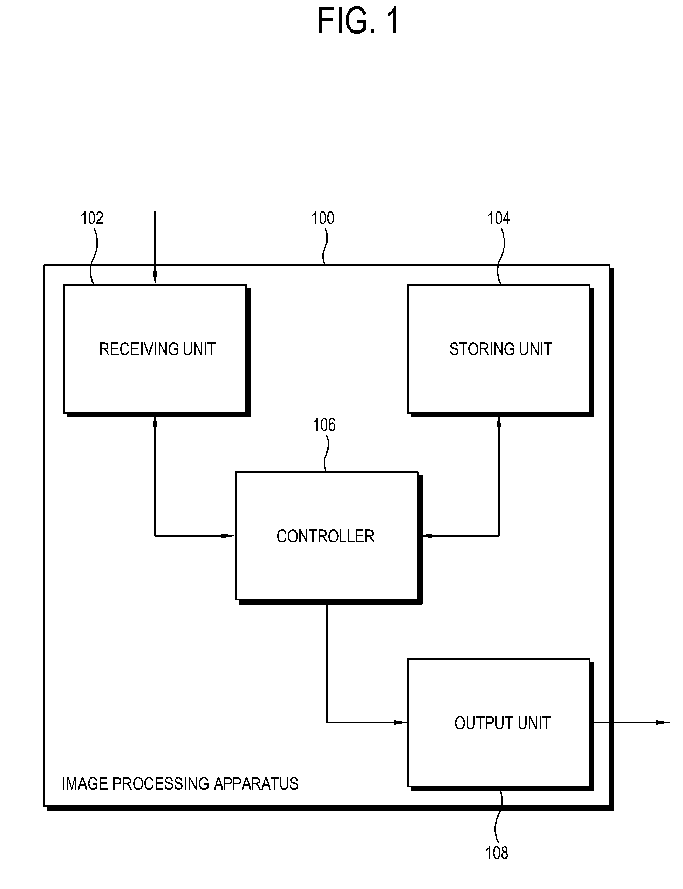

FIG. 1 is a view showing a configuration of an image processing apparatus according to an exemplary embodiment of the present invention.

An image processing apparatus 100 of an exemplary embodiment of the present invention is preferably, but not necessarily, a digital TV, but, without being limited thereto, may be any image processing apparatus such as a desktop computer, a notebook computer, a mobile terminal, a personal digital assistant (PDA) or any apparatus which can conduct bidirectional communication with a base station.

The image processing apparatus 100 may include a receiving unit 102, a storing unit 104, a controller 106 and an output unit 108.

The receiving unit 102 receives broadcasting signals which contain base station information. To this end, the receiving unit 102 may include a tuner (not shown) which selects a broadcasting signal of a desired channel from the received broadcasting signals, a demodulator (not shown) which demodulates the broadcasting signal selected in the tuner into an original signal, etc.

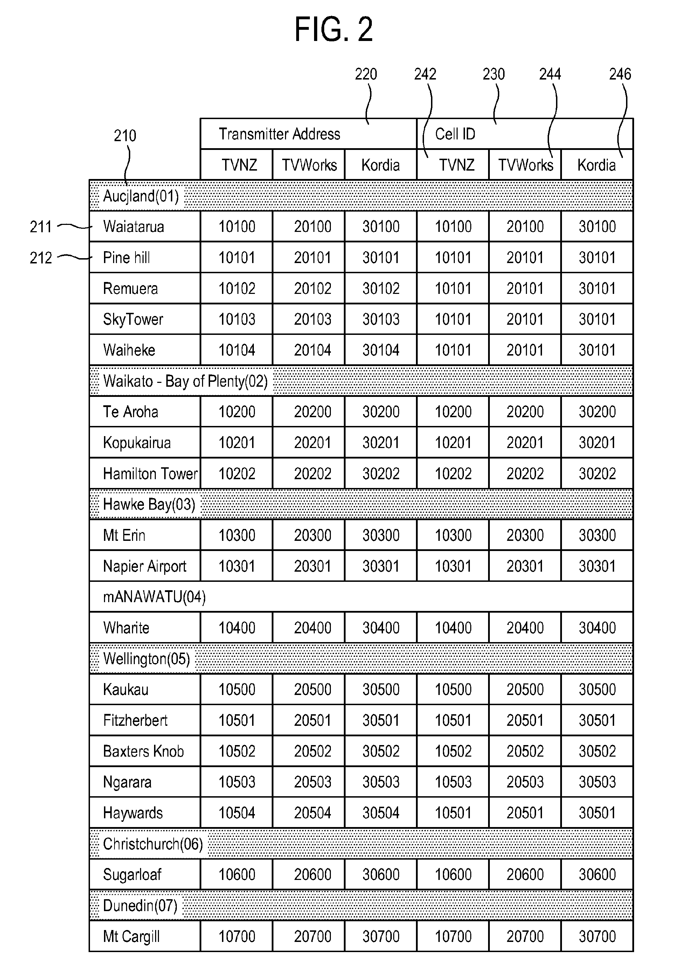

The broadcasting signals may be received in the form of a transport stream. According to one exemplary embodiment of the invention, the base station information may be a Cell ID, which will be described in detail later with reference to FIG. 2.

The storing unit 104 stores information on a standard time zone. Specifically, the storing unit 104 may store information on a standard time zone corresponding to the base station information.

The controller 106 detects the base station information from the received broadcasting signals and sets a time zone to be a standard time zone corresponding to the base station information by referring to the storing unit 104. In an exemplary embodiment the set time zone is a time zone of the image processing apparatus.

In this case, the controller 106 may set the time zone to be a standard time zone corresponding to base station information most frequently detected. In general, broadcasting signals broadcasted from base stations are transmitted to users located within coverage of the base stations. However, users located within coverage of a particular base station may receive a broadcasting signal broadcasted from a different base station. Accordingly, a Cell ID most frequently detected may be determined to be a value representing a region at which a user is currently located. If a region corresponding to the base station information most frequently detected is determined to be the region at which the user is located, it is possible to set to a more precise standard time zone.

The controller 106 may set the time zone at an initial booting or initialization of the image processing apparatus 100. For example, when a user sets a basic function by first powering the image processing apparatus 100 on or newly sets a basic function by initializing the image processing apparatus 100, the image processing apparatus 100 may automatically set the time zone.

Once the standard time zone is set, the controller 106 sets a present date or time according to the set time zone.

Of course, the controller 106 may set the time zone to be the standard time zone according to information manually input by the user.

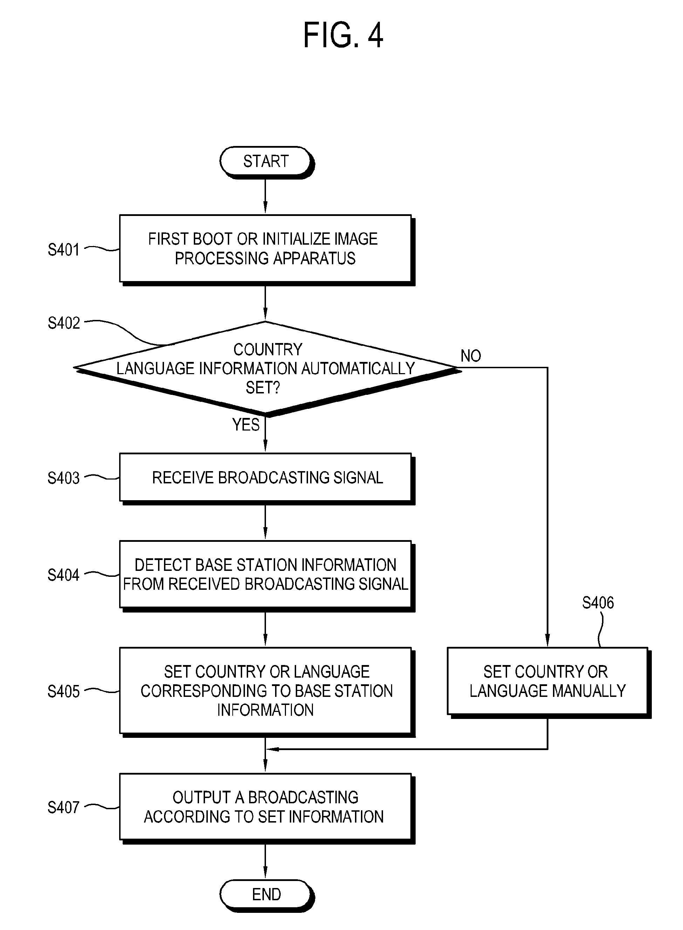

In the meantime, according to another exemplary embodiment of the invention, the controller 106 may set at least one of country information and language information corresponding to the detected base station information, which will be described later with reference to FIG. 4.

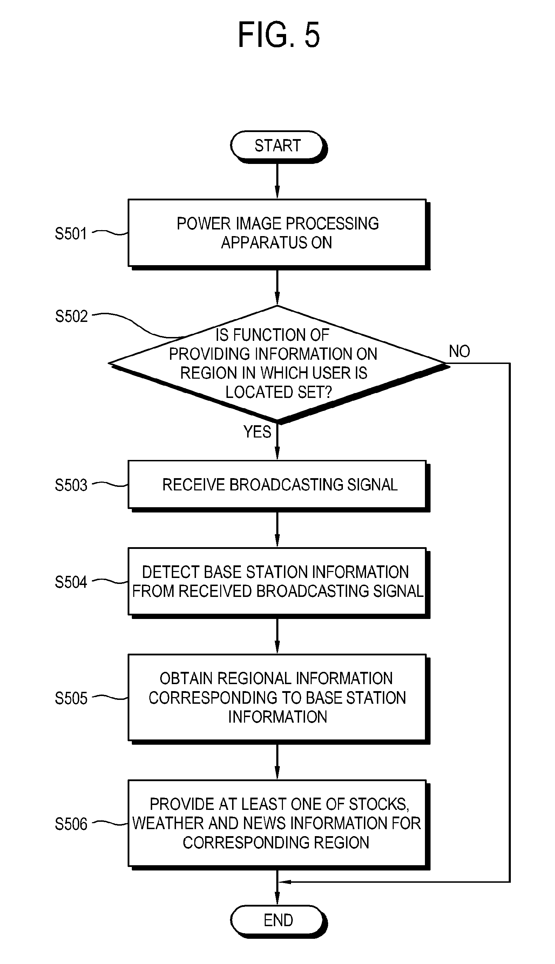

According to still another exemplary embodiment of the invention, the controller 106 may further provide at least one of stocks, weather and news information of a region corresponding to the detected base station information, which will be described later with reference to FIG. 5.

The output unit 108 may output a user menu through which a user can set the time zone. To this end, the output unit 108 may be implemented as a liquid crystal display (LCD), an organic light emitting display (OLED), a plasma display panel (PDP) or the like.

FIG. 2 is a view showing Cell IDs for respective regions of New Zealand.

According to an exemplary embodiment of the invention, the base station information contained in a broadcasting signal may be a Cell ID.

In a digital video broadcasting (DVB) system, which is an European digital broadcasting standard, a Cell ID is contained in a broadcasting signal. The Cell ID is a value representing a region at which a user is currently located, and has a unique value for each region. Accordingly, the use of the Cell ID value allows the user to know the region at which the user is located. Since Cell IDs have not to be overlapped with each other for each region, the Cell ID are decided according to rule by a nation.

In general, Cell IDs are specified in a specification of a corresponding nation. For example, referring to FIG. 2, a broadcasting region of New Zealand generally consists of 7 regions: Auckland (210), Waikato-Bay of Plenty, Hawke Bay, Manawatu, Wellington, Christchurch and Dunedin. In addition the above regions are each divided into several sub regions. In this example, each sub region has its own unique Cell ID value.

TVNZ 242, TVWorks 244 and Kordia 246 correspond to broadcasting stations which broadcast respective broadcasting signals. Each broadcasting station broadcasts the broadcasting signal including a Cell ID. In this case, Cell ID values sent from different broadcasting stations are different from each other, but the last three digits of the Cell IDs are fixed for each region. For example, a Cell ID broadcasted to a sub region 'pine hill' 212 by the TVNZ broadcasting station 242 is 10101, a Cell ID broadcasted to the sub region 'pine hill' 212 by the TVWorks broadcasting station 244 is 20101, and a Cell ID broadcasted to the sub region 'pine hill' 212 by the Kordia broadcasting station 246 is 30101. In this example, it can be seen that later three digits of the Cell IDs are all fixed at XX101. Accordingly, a user can know unique Cell ID information of a corresponding sub region irrespective of which broadcasting station broadcasts a broadcasting signal.

In each broadcasting station, values of a transmitter address 220 are equal to values of a Cell ID 230. However, the transmitter address 220 is an equipment ID of a broadcasting station which is not contained in a broadcasting signal.

On the other hand, the Cell ID is carried on transport stream (TPS) information contained in a broadcasting signal broadcasted from a transmitter, i.e., a broadcasting station. Accordingly, the image processing apparatus can detect the Cell ID from the TPS information contained in the broadcasting signal.

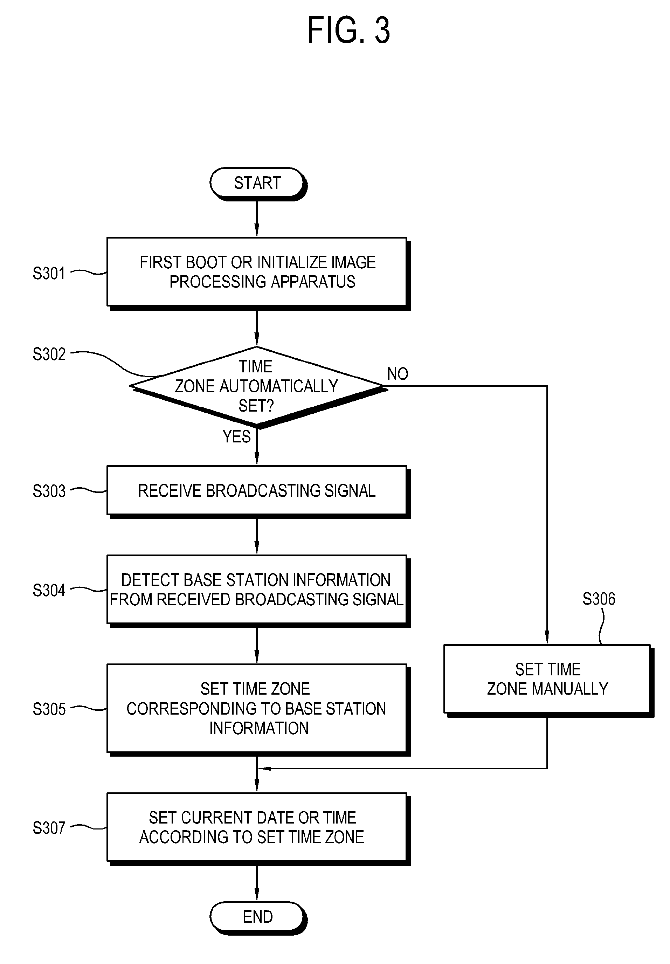

FIG. 3 is a view showing a control process of an image processing apparatus according to a first embodiment of the invention.

According to the first embodiment of the invention, the image processing apparatus can automatically set time corresponding to a current region.

A user first boots the purchased image processing apparatus 100 by powering the image processing apparatus 100 on or initializes the image processing apparatus 100 to newly set a function (S301).

In this case, the image processing apparatus 100 determines whether or not a time zone is automatically set (S302). If it is determined that the time zone is not automatically set, the user may set the time zone to be the standard time zone manually (S306). Accordingly the user inputs or selects his/her region where he/she is located. In exemplary embodiment, the time zone is the time zone of the image processing apparatus.

If the time zone is automatically set, the image processing apparatus 100 receives a broadcasting signal broadcasted from a broadcasting station (S303).

The image processing apparatus 100 detects base station information from the received broadcasting signal (S304). According to one exemplary embodiment of the invention, the base station information contained in the broadcasting signal may be a Cell ID. In this case, the image processing apparatus 100 may detect the Cell ID from TPS information contained in the broadcasting signal. In addition, the image processing apparatus 100 pre-stores information on a standard time zone corresponding to a Cell ID for each region as is specified in each national specification.

The image processing apparatus 100 sets the time zone to be the standard time zone corresponding to the base station information (S305).

The image processing apparatus 100 sets current date or time according to the set standard time zone (S307).

When the user boots the image processing apparatus for the first time, the current time has to be set according to a region in which the user is located. In addition, if a nation is wide so as to provide an incorrect regional time offset, the user has to newly set a time zone.

In the past, information on the entire time zone offsets corresponding to regions has been stored in the image processing apparatus. However, the user has to input a region ID in order to know the information on the time zone offsets.

However, in an exemplary embodiment of the present invention, since the time zone is automatically found and set using the Cell ID information contained in the broadcasting signal, as described above, the user need not input the information separately. This may enhance convenience of a user for the image processing apparatus.

FIG. 4 is a view showing a control process of an image processing apparatus according to a second embodiment of the invention.

At an initial booting of the image processing apparatus, a user sets not only time information but also country and language information. Accordingly, in the second embodiment of the invention, country or language information of a region in which the user is currently located is automatically set using Cell ID information contained in a broadcasting signal.

The user first boots the purchased image processing apparatus 100 by powering the image processing apparatus 100 on or initializes the image processing apparatus 100 to newly set a function (S401).

In this case, the image processing apparatus 100 determines whether or not country or language information is automatically set (S402). If it is determined that the information is not automatically set, the user sets the country or language information manually (S406).

If the country or language information is automatically set, the image processing apparatus 100 receives a broadcasting signal broadcasted from a broadcasting station (S403).

The image processing apparatus 100 detects base station information from the received broadcasting signal (S404). According to one exemplary embodiment of the invention, the base station information contained in the broadcasting signal may be a Cell ID.

The Cell ID is a value representing a region at which the user is currently located, and has a unique value for each region. The Cell ID is defined in each national specification for each corresponding nation. Therefore, when Cell ID information is obtained, the country or language information can also be known from the obtained Cell ID information.

The image processing apparatus 100 sets the country or language information corresponding to the base station information (S405). Thereafter, the image processing apparatus 100 outputs a broadcasting signal based on the set information (S407). For example, an audio or a caption can be output based on the set language information. In addition, the image processing apparatus can output a terrestrial broadcasting according to a standard corresponding to the set country information.

Thus, according to an exemplary embodiment of the present invention, the user can automatically set the country or language information, which would have otherwise been input one by one to set basic functions, using the Cell ID information.

FIG. 5 is a view showing a control process of an image processing apparatus according to a third embodiment of the invention.

According to the third embodiment of the invention, other different information about a region in which a user is located may be further provided to the user. In this case, the image processing apparatus 100 may provide at least one of stocks, weather and news information of a region corresponding to base station information detected from a broadcasting signal.

The user powers the image processing apparatus on (S501). The information provided in this embodiment is not information set in an initial use, such as standard time zone, and country and language information. Rather, since the information provided in this embodiment is information varied in real time, there is a need to provide this information whenever the image processing apparatus 100 is powered on because of the nature of this information.

The image processing apparatus 100 determines whether or not the user sets a function of providing information about a region in which the user is located (S502). If it is determined that the user does not set the information providing function, the process is ended.

If it is determined that the user sets the information providing function, the image processing apparatus 100 receives a broadcasting signal broadcasted from a broadcasting station (S503).

The image processing apparatus 100 detects base station information from the received broadcasting signal (S504). According to one exemplary embodiment of the invention, the base station information contained in the broadcasting signal may be a Cell ID.

The image processing apparatus 100 obtains regional information corresponding to the detected base station information (S505). In this case, the image processing apparatus 100 provides the user with at least one of stocks, weather and news for a corresponding region (S506). Thus, a control process of the image processing apparatus according to the third embodiment of the invention is ended.

In this manner, according to the third embodiment of the invention, the user can receive various kinds of information related to the region in which the user is located, without separate settings.

Although a few exemplary embodiments of the present invention have been shown and described, it will be appreciated by those skilled in the art that changes may be made in these embodiments without departing from the principles of the invention, the scope of which is defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus comprising:
a storing unit which stores information on a standard time zone;
a receiving unit which receives a broadcasting signal containing base station information; and
a controller which detects the base station information from the broadcasting signal and sets a time zone of the image processing apparatus to be the standard time zone corresponding to the base station information, by referring to the storing unit.

2. The image processing apparatus according to claim 1, wherein the base station information is base station information most frequently detected.

3. The image processing apparatus according to claim 1, wherein the base station information comprises a Cell ID.

4. The image processing apparatus according to claim 3, wherein the controller detects the Cell ID from transport stream (TPS) information contained in the broadcasting signal.

5. The image processing apparatus according to claim 1, wherein the controller sets the time zone of the image processing apparatus at an initial booting or an initialization of the image processing apparatus.

6. The image processing apparatus according to claim 1, wherein the storing unit stores information on standard time zones corresponding to plural pieces of base station information.

7. The image processing apparatus according to claim 1, further comprising an output unit which outputs a user menu which receives user input for setting the time zone of the image processing apparatus.

8. The image processing apparatus according to claim 1, wherein the controller sets at least one of country information and language information of the image processing apparatus based on the detected base station information.

9. The image processing apparatus according to claim 1, wherein the controller provides at least one of weather information and news information about a region corresponding to the detected base station information.

10. A control method of an image processing apparatus, comprising:
storing information on a standard time zone;
receiving a broadcasting signal containing base station information; and
detecting the base station information from the broadcasting signal and setting a time zone of the image processing apparatus to be the standard time zone corresponding to the base station information, by referring to the stored information.

11. The control method according to claim 10, wherein the base station information is base station information most frequently detected.

12. The control method according to claim 10, wherein the base station information comprises a Cell ID.

13. The control method according to claim 10, wherein the setting the time zone of the image processing apparatus comprises setting at least one of country information and language information based on the base station information.

14. The control method according to claim 10, wherein the setting the time zone of the image processing apparatus comprises providing at least one of weather information and news information about region corresponding to the detected base station information.

15. A control method of an image processing apparatus, comprising:
wirelessly receiving identification information of a fixed transmitter;
determining a time zone where the fixed transmitter is located by comparing the received identification information with pre-stored plural identification information of fixed transmitters and corresponding time zone information;
setting a time zone setting of the image processing apparatus to be the time zone where the fixed transmitter is located, based on the determining.
